# EUROPÄISCHE PATENTANMELDUNG

(11) **EP 3 993 239 A1**
(43) Veröffentlichungstag der Anmeldung: **04.05.2022**
(21) Anmeldenummer: 21204967.0
(22) Anmeldetag: 27.10.2021
(51) Int. Cl.: H02K 33/16

(54) **AKTUATOR ZUR ANREGUNG VON SCHWINGUNGEN UMFASSEND EINEN ANTRIEB MIT VERBESSERTER DÄMPFUNG**

(30) Priorität: 02.11.2020 DE 102020213768
(71) Anmelder: Continental Engineering Services GmbH, 60489 Frankfurt (DE)
(72) Erfinder: Neubauer, Philipp, 60488 Frankfurt am Main (DE); Ferekidis, Charalampos, 32756 Detmold (DE); Patsouras, Dimitrios, 60488 Frankfurt am Main (DE); Joest, Robert, 60488 Frankfurt am Main (DE); Eisele, Stephan, 60488 Frankfurt am Main (DE); Kerkmann, Johannes, 60488 Frankfurt am Main (DE); Moritz, Karsten, 60488 Frankfurt am Main (DE); Köhler, Pascal, 60488 Frankfurt am Main (DE); Wick, Robert, 60488 Frankfurt am Main (DE); Friedrich, Jens, 60488 Frankfurt am Main (DE)
(74) Vertreter: Continental Corporation

(57) **Zusammenfassung**

Aktuator zum Anregen wenigstens eines Bauteils (7) eines Kraftfahrzeugs mit Schwingungen,
wobei der Aktuator folgendes aufweist:
- ein Gehäuse (4), welches dazu ausgebildet ist, direkt oder indirekt mit dem Bauteil (7) verbunden zu werden,
- eine elektrische Spule (8), welche mit dem Gehäuse (4) verbunden ist und dazu ausgebildet ist, bei Durchfließen eines elektrischen Stroms durch die Spule (8) ein elektromagnetisches Feld zu erzeugen, und
- einen Magneten (1), welcher ganz oder teilweise in dem Gehäuse (4) angeordnet ist und
- der Magnet (1) relativ zu dem Gehäuse (4) begrenzt beweglich angeordnet ist, wobei das Gehäuse (4) umlaufend wenigstens einen elektrischen leitfähigen Kranz (9) aufweist, welcher den Magneten (1) hinsichtlich dessen unausgelenkten Zustands umschließt.

## Beschreibung

Die Erfindung betrifft einen Aktuator gemäß Oberbegriff von Anspruch 1.

Die Erfindung hat sich die Aufgabe gestellt, einen Aktuator vorzuschlagen, welcher relativ präzise ausgelegt ist und/oder relativ kostengünstig ist und/oder eine verbesserte Dämpfung aufweist.

Diese Aufgabe wird erfindungsgemäß gelöst durch den Aktuator gemäß Anspruch 1.

Alternativ vorzugsweise betrifft die Erfindung einen Aktuator zum Anregen wenigstens eines Bauteils eines Kraftfahrzeugs mit Schwingungen, wobei der Aktuator folgendes aufweist:
- ein Gehäuse, welches dazu ausgebildet ist, direkt oder indirekt mit dem Bauteil verbunden zu werden,
- zumindest eine elektrische Spule, welche mit dem Gehäuse verbunden ist und dazu ausgebildet ist, bei Durchfließen eines elektrischen Stroms durch die Spule ein elektromagnetisches Feld zu erzeugen, und
- wenigstens einen Magneten, welcher ganz oder teilweise in dem Gehäuse angeordnet ist und
- der Magnet relativ zu dem Gehäuse begrenzt beweglich angeordnet ist, wobei das Gehäuse umlaufend zumindest einen Kranz aufweist, welcher aus im Wesentlichen nichtpermanent-magnetisiertem, ferromagnetischen Material ausgebildet ist oder dieses Material enthält, wobei der Kranz den Magneten hinsichtlich dessen unausgelenkten Zustands umschließt. Insbesondere ist dieser Kranz aus elektrisch leitfähigem Material ausgebildet oder weist eine elektrisch leitfähige umlaufend geschlossene Schleife bzw. Ring auf.

Das Bauteil ist zweckmäßigerweise als flächiges Bauteil bzw. als flächige Struktur ausgebildet bzw. als eine der folgenden Strukturen eines Kraftfahrzeugs ausgebildet, als Bodenblech, Türstrukturblech, Kofferraumdeckel, Reserveradmulde, Dachstruktur, Querträger, Kotflügel, Längsträger, Türträger, Stirnwand oder Rahmenteil. Dabei ist diese Struktur insbesondere als Karbon und/oder glasfaserverstärktem Kunststoff GFK und/oder kohlefaserverstärktem Kunststoff, CFK oder Stahl bzw. Aluminium ausgebildet.

Der Magnet ist zweckmäßigerweise als Permanentmagnet ausgebildet, insbesondere aus ferromagnetischem Material, beispielsweise Neodym-Eisen-Bor.

Unter der Bewegungsrichtung des Magneten wird vorzugsweise dessen Schwingungsrichtung verstanden, dabei insbesondere die Schwingungsrichtung, in welcher er aufgrund des Antriebs durch die Spule schwingt.

Zweckmäßigerweise weist der Kranz bzw. Ring im Wesentlichen in seiner Mitte eine Ausnehmung/ Loch auf, wo der Magnet sich hindurchbewegen kann.

Bevorzugt weist der Aktuator ein Gehäuse auf, welches dazu ausgebildet ist, mit dem Bauteil direkt oder indirekt verbunden zu werden, insbesondere indirekt über wenigstens eine Zwischenschicht oder zumindest ein zusätzliches Zwischenelement zwischen Gehäuse und Bauteil.

Vorzugsweise ist die eine elektrische Spule starr mit dem Gehäuse verbunden.

Bevorzugt ist der Magnet begrenzt beweglich angeordnet, im Wesentlichen hinsichtlich eines Freiheitsgrades, insbesondere im Wesentlichen parallel zur Längsrichtung durch die Spule.

Zweckmäßigerweise ist der Kranz insbesondere ringförmig ausgebildet, dabei insbesondere kreisringförmig oder als ovaler Ring ausgebildet. Der Kranz weist alternativ vorzugsweise eine mehreckige Form hinsichtlich seiner geschlossenen Umfangslinie bzw. seiner Umschließungslinie auf, wobei dessen Ecken gerundet bzw. abgerundet sein können.

Unter dem unausgelenkten Zustand des Magneten wird zweckmäßigerweise ein Ruhezustand bzw. eine Ruhelage bzw. ein unangeregter Zustand, insbesondere ohne Krafteinwirkung und/oder bei stromfreier Spule, des Magneten hinsichtlich seiner Bewegung im Gehäuse verstanden.

Bevorzugt ist der Aktuator so ausgebildet, dass der Kranz und/oder das Gehäuse den Magneten hinsichtlich dessen unausgelenkten Zustands umschließt bzw. umringt bzw. umschlingt bzw. umlaufend ausgebildet ist.

Bevorzugt umschließt der Kranz den Magneten im unausgelenkten Zustand hinsichtlich dessen Höhe in Bewegungsrichtung im Wesentlichen mittig. Insbesondere umschließt der Kranz den Magneten dabei, falls die Höhe des Kranzes geringer ist als die Höhe des Magneten, so dass im unausgelenkten Zustand des Magneten beidseitig in Bewegungsrichtung des Magneten der Magnet über den vom Kranz umschlossenen Bereich übersteht, besonders bevorzugt beidseitig im Wesentlichen gleich übersteht.

Der elektrisch leitfähige Kranz ist vorzugsweise aus ferromagnetischem Material ausgebildet oder der Aktuator weist mindestens einen zusätzlichen Kranz aus ferromagnetischem Material auf, wobei dieser zusätzliche Kranz den Magneten hinsichtlich dessen unausgelenkten Zustands umschließt. Insbesondere umschließt der elektrisch leitfähige Kranz den zusätzlichen Kranz oder anders herum und der elektrisch leitfähige Kranz und der zusätzliche Kranz sind dabei gemeinsam in oder an dem Gehäuse angeordnet oder Teil des Gehäuses. Durch den bevorzugten Einsatz von ferromagnetischem Material in dem Kranz bzw. in einem zusätzlichen Kranz wird eine definierte Rückstellung bzw. Rückstellkraft hinsichtlich der Auslenkung des Magneten entlang seiner Bewegungsrichtung erreicht.

Es ist bevorzugt, dass der elektrisch leitfähige Kranz teilweise oder vollständig in das Gehäuse eingelassen ist und/oder an dem Gehäuse angeordnet ist und/oder Teil des Gehäuses ist.

Es ist zweckmäßig, dass der elektrisch leitfähige Kranz oder der zusätzliche ferromagnetische Kranz nicht permanent magnetisiert sind.

Die Höhe des Kranzes ist vorzugsweise im Wesentlichen gleich der Höhe des Magneten ausgebildet hinsichtlich der Bewegungsrichtung des Magneten.

Es ist zweckmäßig, dass die Höhe des Kranzes um maximal 50%, insbesondere maximal 30%, größer ist als die Höhe des Magneten hinsichtlich der Bewegungsrichtung des Magneten.

Alternativ vorzugsweise ist die Höhe des Kranzes um maximal 50% geringer, insbesondere maximal 30% geringer, ist als die Höhe des Magneten hinsichtlich der Bewegungsrichtung des Magneten.

Es ist zweckmäßig, dass der elektrisch leitfähige Kranz im Wesentlichen das Gehäuse bildet.

Es ist bevorzugt, dass das Gehäuse abschnittsweise aus mehreren Schichten unterschiedlicher Materialien ausgebildet ist, wobei der Kranz als eine der Schichten ausgebildet ist. Dabei sind diese Schichten übereinander und/oder einander umschließend bzw. nebeneinander in dem Gehäuse ausgebildet.

Der wenigstens eine elektrisch leitfähige Kranz ist vorzugsweise aus einem Halbleitermaterial mit adaptiv veränderlichem elektrischem Widerstand ausgebildet.

Es ist bevorzugt, dass der Aktuator zusätzlich zu dem elektrisch leitfähigen Kranz hinsichtlich der Bewegungsrichtung des Magneten jeweils darüber und darunter einen zusätzlichen elektrisch leitfähigen Kranz aufweist, insbesondere bündig und/oder vom Querschnitt her fluchtend bzw. im Wesentlichen hinsichtlich des Querschnitts gleich, wobei die beiden zusätzlichen elektrisch leitfähigen Kränze insbesondere eine vom ersten bzw. mittleren Kranz verschiedene spezifische elektrische Leitfähigkeit aufweisen, wobei besonders bevorzugt diese beiden zusätzlichen Kränze hinsichtlich des unausgelenkten Zustands des Magneten die Höhe des Magneten beidseitig überragen. Ganz besonders bevorzugt sind diese beiden zusätzlichen elektrisch leitfähigen Kränze aus Aluminium ausgebildet.

Es ist bevorzugt, dass die Spule auf der inneren Mantelfläche des Gehäuses angeordnet ist und der elektrisch leitfähige Kranz außen um die Spule herum angeordnet ist.

Es ist zweckmäßig, dass der Magnet hinsichtlich seiner Höhe oben und unten jeweils eine Polplatte aus ferromagnetischem Material aufweist, welche insbesondere eine im Wesentlichen gleiche Grundfläche aufweisen, wie der Magnet.

Es ist bevorzugt, dass der Magnet eine hinsichtlich des Gehäuses zentrierende Führung entlang seiner Bewegungsrichtung aufweist, insbesondere ist die Führung dabei durch mehrere Federelement ausgebildet, mittels denen der Magnet an dem Gehäuse direkt oder indirekt aufgehängt ist.

Bevorzugt beschreibt/definiert der Designparameter *α* das Verhältnis der Höhe des Magneten zur Höhe des Kranzes in Schwingungsrichtung. Relevant ist dabei insbesondere der Bereich für 0,5 ≤ *α* ≤ 2, wobei sich für *α >* 1 eine annähernd lineare Charakteristik der Rückstellkraft und für *α* < 1 eine progressive Charakteristik der Rückstellkraft ergibt.

Zweckmäßigerweise sind das Gehäuse und/oder der Kranz und/oder der zusätzliche Kranz ganz oder teilweise aus dem Werkstoffen Eisen bzw. Nickel bzw. Cobalt gefertigt und/oder enthalten einen, zwei oder alle diese Werkstoffe.

Bevorzugt ist der Kranz hinsichtlich seiner elektrischen Leitfähigkeit bzw. hinsichtlich seines elektrisch leitfähigen Materials so ausgebildet, dass er bzw. dieses einen spezifischen elektrischen Widerstand zwischen 0,22 µΩ m und 920 Ω m aufweist.

Zweckmäßigerweise sind das Gehäuse und/oder der Kranz und/oder der zusätzliche Kranz hinsichtlich ihres ferromagnetischen Materials ganz oder teilweise aus den Werkstoffen Eisen bzw. Aluminium bzw. Kupfer bzw. Nickel, Cobalt bzw. Magnesium bzw. Kohlenstoff ausgebildet.

Bevorzugt ist der Kranz und/oder eines oder mehrerer zusätzlicher Kränze hinsichtlich seiner elektrischen Leitfähigkeit bzw. hinsichtlich seines elektrisch leitfähigen Materials so ausgebildet, dass das Gehäuse abschnittsweise, insbesondere in radialer bzw. tangentialer bzw. axialer Richtung, aus mehreren unterschiedlichen Materialien mit unterschiedlichen spezifischen elektrischen Widerständen, geschichtet aufgebaut ist.

### Bezugszeichen

- 1: Magnet
- 2: Polplatte
- 3: Federelement
- 4: Gehäuse
- 5: Bewegungsrichtung des Magneten
- 6: unausgelenkter Zustand
- 7: Bauteil was zu Schwingungen angeregt wird
- 8: Spule
- 9: Kranz
- 10: Magnetkräfte bzw. Rückstellkräfte zwischen dem Magneten und dem ferromagnetischen Material des Kranzes oder eines zusätzlichen Kranzes
- 11: Höhe des Kranzes
- 12: Höhe des Magneten bzw. Gesamthöhe des Magneten mit Polplatten

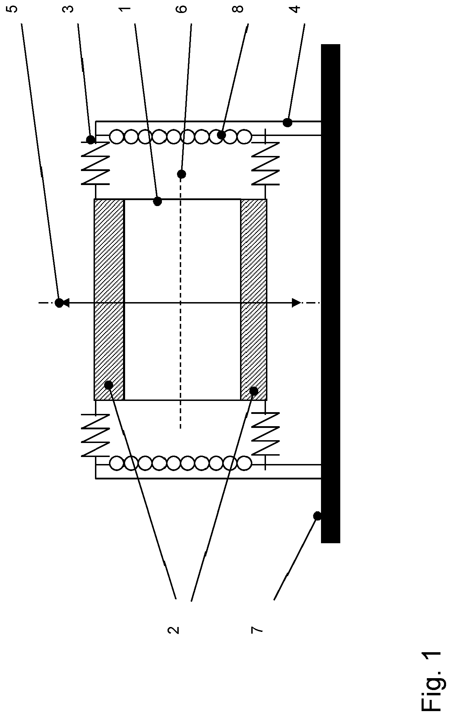

Fig. 1 zeigt den schematischen Aufbau eines Ausführungsbeispiels eines Aktuators bzw. elektrodynamischen Schwingerregers. An Magneten 1 sind an seinen beiden Polen Polplatten 2 angebracht. Das schwingende Gesamtsystem aus Magneten 1 und Polplatten 2 ist mittels Federelementen 3 elastisch an das Gehäuse 4 derartig gekoppelt, sodass die Schwingung hauptsächlich in die dargestellte Schwingungsrichtung bzw. Bewegungsrichtung 5 des Magneten 1 möglich ist, wobei die Schwingung um eine zentrale Ruhelage bzw. unausgelenkten Zustand 6 stattfindet. Das Gehäuse 4 ist mit Bauteil 7 was zu Schwingungen angeregt wird und beispielsweise als eine flächige Struktur ausgebildet ist gekoppelt. Die am Gehäuse 4 angebundene Spule 8 wird elektrisch erregt, sodass sich ein Stromfluss in der Spule einstellt. Durch die Interaktion zwischen stromdurchflossener Spule 8 sowie Magnet 1 und Polplatten 2 entstehen Anregungskräfte zwischen Spule 8 und Polplatten 2, was zu einer Anregung mechanischer Schwingungen in der flächigen Struktur 7 führt.

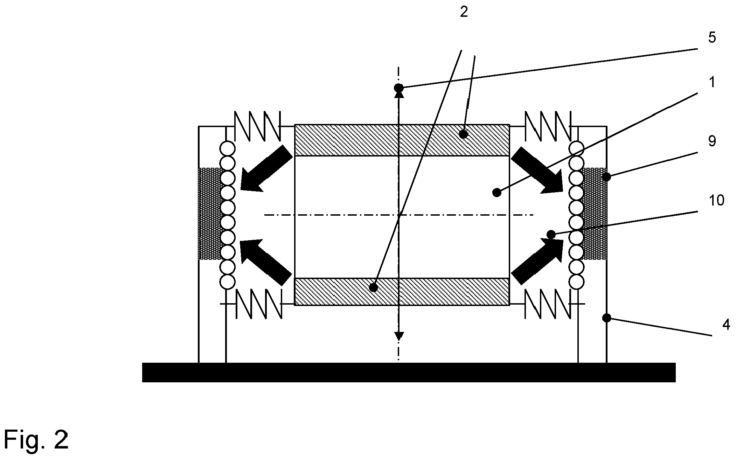

Anhand der Fig. 2 ist beispielsweise, schematische dargestellt, eine zentrierende, magnetische Rückstellkraft 10 durch das ferromagnetische Material in Kranz 9 in Gehäuse 4 angeordnet, veranschaulicht. Das durch den Magneten 1 erzeugte und durch die Polplatten 2 konzentrierte Magnetfeld bewirkt Magnetkräfte 10 in Richtung des ferromagnetischen Materials des Kranzes 9. Der Magnet 1 zentriert sich in Auslenkungsrichtung 5 mit seinen Polplatten 2 somit immer näherungsweise um das ferromagnetische Material des Kranzes 9. Beispielgemäß ist Kranz 9 außerdem aus elektrisch leitfähigem Material ausgebildet, wodurch zusätzlich eine Dämpfung der Schwingung bzw. Auslenkungsbewegung des Magneten 1 entlang seiner Bewegungsrichtung 5 erreicht wird.

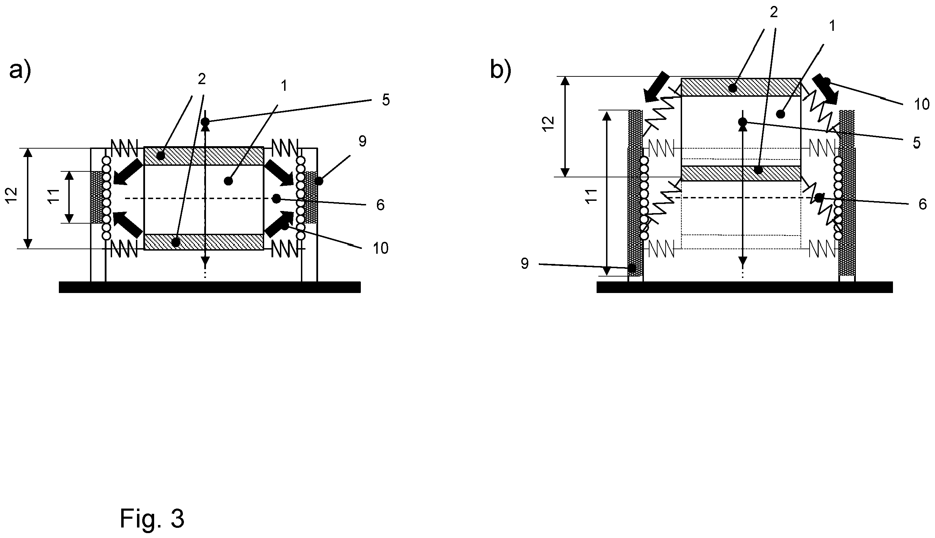

In Fig. 3a ist beispielgemäß, schematisch dargestellt, ein Aktuator, wobei die Höhe 11 des Kranzes 9 aus ferromagnetischem *h*_{ferro} und elektrisch leitfähigem Material geringer als die Gesamthöhe 12 aus Magnet 1 und Polplatten 2 *h*_{Magnet}. Hierdurch findet eine magnetische Selbstzentrierung in Auslenkungsrichtung 5 über die Magnetkräfte bzw. Rückstellkräfte 10 bereits ohne eine Auslenkung aus der Ruhelage bzw. unausgelenktem Zustand 6 statt.

Außerdem erfolgt durch die Ausbildung des Kranzes 9 aus elektrisch leitfähigem Material im Zuge der Bewegung des Magneten 1 eine Induktion von Wirbelströmen in Kranz 9, wobei dieser Wirbelströme gemäß lenz'scher Regel der Bewegung des Magneten entgegen wirken und dadurch die Bewegung des Magneten dämpfen.

Fig. 3b zeigt schematisch ein Ausführungsbeispiel des Aktuators, wobei die Höhe 11 des Kranzes 9 aus ferromagnetischem und elektrisch leitfähigem Material Materials *h*_{ferro} größer als die Gesamthöhe 12 aus Magnet 1 und Polplatten 2 *h*_{Magnet}. Hierdurch erfolgt beispielgemäß die magnetische Selbstzentrierung in Auslenkungsrichtung 6 über die Magnetkräfte 10, wenn die Auslenkung des Magneten 1 so groß ist, dass eine Polplatte 2 über den Rand des Kranzes 9 hinausragt. Somit lässt sich eine progressive Federkennlinie erzeugen.

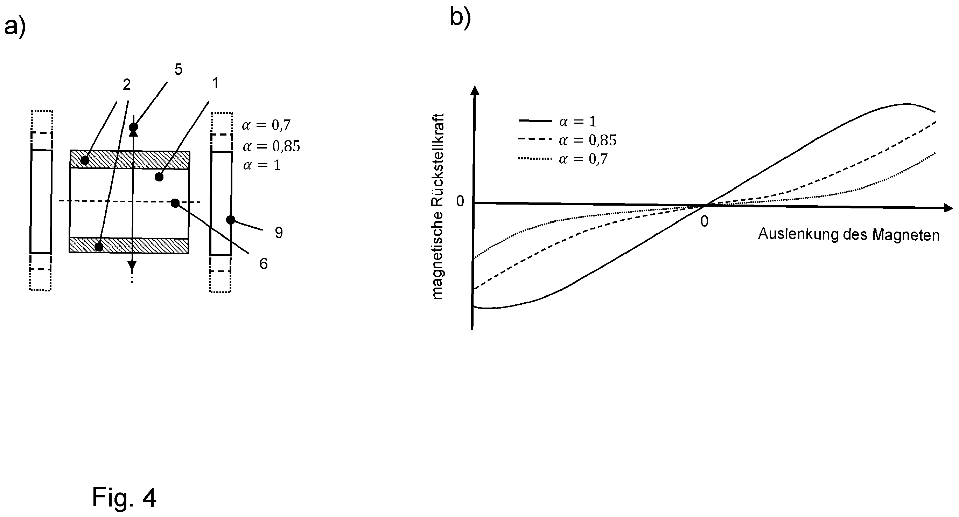

Anhand der Fig. 4 a) und b) ist schematisch, beispielhaft die Charakteristik der magnetischen Rückstellkraft für verschiedene Werte von *α* (= *h*_{Magnet/}*h*_{ferro}) veranschaulicht. Ist die Höhe des Kranzes 9 aus ferromagnetischem Material in Schwingungsrichtung 5 gleich hoch wie die Summe der Gesamthöhe des Magneten 1 und dessen beidseitigen Polplatten 2 (*α*=1), ergibt sich eine nahezu lineare Charakteristik der magnetischen Rückstellkraft um die Ruhelage bzw. unausgelenkten Zustand 6. Ist die Höhe des Kranzes 9 aus ferromagnetischem Material in Schwingungsrichtung 5 größer als die Gesamthöhe des Magneten 1 und dessen beidseitigen Polplatten 2 (*α*<1), ergibt sich eine progressive Charakteristik der magnetischen Rückstellkraft um die Ruhelage 6. Der Verlauf der magnetischen Rückstellkräfte in Abhängigkeit der Auslenkung des Magneten ist dabei anhand der Fig. 4 b) veranschaulicht.

## Patentansprüche

1. Aktuator zum Anregen wenigstens eines Bauteils (7) eines Kraftfahrzeugs mit Schwingungen,
wobei der Aktuator folgendes aufweist:
- ein Gehäuse (4), welches dazu ausgebildet ist, direkt oder indirekt mit dem Bauteil (7) verbunden zu werden,
- wenigstens eine elektrische Spule (8), welche mit dem Gehäuse (4) verbunden ist und dazu ausgebildet ist, bei Durchfließen eines elektrischen Stroms durch die Spule (8) ein elektromagnetisches Feld zu erzeugen, und
- zumindest einen Magneten (1), welcher ganz oder teilweise in dem Gehäuse (4) angeordnet ist und
- der Magnet (1) relativ zu dem Gehäuse (4) begrenzt beweglich angeordnet ist,
**dadurch gekennzeichnet, dass**
das Gehäuse (4) umlaufend wenigstens einen elektrischen leitfähigen Kranz (9) aufweist, welcher den Magneten (1) hinsichtlich dessen unausgelenkten Zustands umschließt.

2. Aktuator gemäß Anspruch 1, **dadurch gekennzeichnet, dass** der elektrisch leitfähige Kranz (9) aus ferromagnetischem Material ausgebildet ist oder der Aktuator mindestens einen zusätzlichen Kranz aus ferromagnetischem Material aufweist, wobei dieser zusätzliche Kranz den Magneten (1) hinsichtlich dessen unausgelenkten Zustands (6) umschließt.

3. Aktuator gemäß Anspruch 2, **dadurch gekennzeichnet, dass** der elektrisch leitfähige Kranz (9) den zusätzlichen Kranz umschließt oder anders herum und der elektrisch leitfähige Kranz und der zusätzliche Kranz dabei gemeinsam in oder an dem Gehäuse (4) angeordnet sind oder Teil des Gehäuses sind.

4. Aktuator gemäß mindestens einem der vorhergehenden Ansprüche, **dadurch gekennzeichnet, dass** der elektrisch leitfähige Kranz (9) teilweise oder vollständig in das Gehäuse (4) eingelassen ist.

5. Aktuator gemäß mindestens einem der vorhergehenden Ansprüche, **dadurch gekennzeichnet, dass** der elektrisch leitfähige Kranz (9) oder der zusätzliche ferromagnetische Kranz nicht permanent magnetisiert sind.

6. Aktuator gemäß mindestens einem der vorhergehenden Ansprüche, **dadurch gekennzeichnet, dass** die Höhe (11) des Kranzes (9) im Wesentlichen gleich der Höhe (12) des Magneten (1) ausgebildet ist hinsichtlich der Bewegungsrichtung (5) des Magneten.

7. Aktuator gemäß mindestens einem der vorhergehenden Ansprüche, **dadurch gekennzeichnet, dass** die Höhe (11) des Kranzes (9) um maximal 50%, insbesondere maximal 30%, größer ist als die Höhe (12) des Magneten (1) hinsichtlich der Bewegungsrichtung (5) des Magneten.

8. Aktuator gemäß mindestens einem der vorhergehenden Ansprüche, **dadurch gekennzeichnet, dass** die Höhe (11) des Kranzes (9) um maximal 50% geringer, insbesondere maximal 30% geringer, ist als die Höhe (12) des Magneten (1) hinsichtlich der Bewegungsrichtung (5) des Magneten.

9. Aktuator gemäß mindestens einem der vorhergehenden Ansprüche, **dadurch gekennzeichnet, dass** der elektrisch leitfähige Kranz (9) im Wesentlichen das Gehäuse (4) bildet.

10. Aktuator gemäß mindestens einem der vorhergehenden Ansprüche, **dadurch gekennzeichnet, dass** das Gehäuse (4) Abschnittsweise aus mehreren Schichten unterschiedlicher Materialien ausgebildet ist, wobei der Kranz (9) als eine der Schichten ausgebildet ist.

11. Aktuator gemäß mindestens einem der vorhergehenden Ansprüche, **dadurch gekennzeichnet, dass** der wenigstens eine elektrisch leitfähige Kranz (9) aus einem Halbleitermaterial mit adaptiv veränderlichem elektrischem Widerstand ausgebildet ist.
